# EUROPEAN PATENT APPLICATION

(11) **EP 4 617 908 A1**
(43) Date of publication of application: **17.09.2025**
(21) Application number: 23887834.2
(22) Date of filing: 30.10.2023
(51) Int. Cl.: G06F 16/34

(54) **DOWNSTREAM TASK MODEL GENERATION METHOD, TASK EXECUTION METHOD, AND DEVICE**

(30) Priority: 08.11.2022 CN 202211387996
(71) Applicant: Alibaba Innovation Private Limited, Singapore 189554 (SG)
(72) Inventor: YANG, Hao, Hangzhou, Zhejiang 310030 (CN); LIN, Junyang, Beijing 100102 (CN); YANG, An, Beijing 100102 (CN); WANG, Peng, Beijing 100102 (CN); ZHOU, Chang, Beijing 100102 (CN); YANG, Hongxia, Hangzhou, Zhejiang 310030 (CN)
(74) Representative: Barker Brettell LLP
(86) International application number: PCT/CN2023/127845
(87) International publication number: WO 2024/099144

(57) **Abstract**

The present application provides a downstream task model generation method, a task execution method and a device. According to the method of the present application, the training data set in the downstream task scene is obtained, the execution parameters of the downstream task are added to the original parameters of the pre-training model, the original parameters of the pre-training model are fixed in the process of fine-tuning training for the pre-training model, and only a small number of added execution parameters of the downstream task are optimized based on the training data set in the downstream task scene, so that the knowledge learned by the pre-training model in the pre-training corpora can be preserved. Moreover, the number of parameters to be optimized is reduced, and a better fine-tuning training effect is obtained under the condition that only a small number of samples are used, so that the calculation overhead caused by fine-tuning all model parameters can be reduced, the fine-tuning efficiency of the pre-training model can be improved, the rapid fine-tuning for the pre-training model can be realized, and the generation efficiency and performance of the downstream task model can be improved.

## Description

The present application claims priority to Chinese patent application No. 202211387996.7, entitled "DOWNSTREAM TASK MODEL GENERATION METHOD, TASK EXECUTION METHOD AND DEVICE" and filed with the China National Intellectual Property Administration on November 8, 2022, the content of which is incorporated into this application by reference in its entirety.

### TECHNICAL FIELD

The present application relates to the computer technology and, in particular, to a downstream task model generation method, a task execution method and a device.

### BACKGROUND

With the rapid development of computer technology, natural language processing has also flourished. In the fields of natural language processing (Natural Language Processing, NLP) and computer vision, a pre-training language model has been widely concerned and used. The pre-training language model can be pre-trained on large-scale unlabeled corpora and can learn common language representations. These representations can be used in other downstream tasks, such as Visual Question Answering (Visual Question Answering, VQA), Image Caption (Image Caption, IC), Visual Entailment (Visual Entailment, VE), Referring Expression Comprehension (Referring Expression Comprehension, REC), and other tasks that cross fields of NLP and computer vision, as well as tasks in the field of natural language processing, such as text-based emotion classification tasks and text summarization tasks, which can be applied to visual assistants, intelligent robots, online education and other application fields.

When applying to downstream tasks, it is necessary to fine-tune the pre-training tasks based on the data sets of the downstream tasks, so that the fine-tuned model is more suitable for the downstream tasks. The diverse downstream tasks make the target design of the pre-training model in the fine-tuning stage very complicated. As the targets between the pre-training model and the downstream tasks are inconsistent, there is often a "gap" and there is a structure bias (structure bias) between the input and the output. Therefore, the pre-training model usually cannot directly adapt to the downstream tasks, and it is necessary to use the data set of the downstream task to fine-tune a parameter of the pre-training model. However, with the increasing scale of the pre-training model, the hardware requirements for fine-tuning the pre-training model and downstream data requirements are constantly rising, and it is inefficient to generate the downstream task model by fine-tuning the parameters of the pre-training model.

### SUMMARY

The present application provides a downstream task model generation method, a task execution method and a device, which are used for solving the problem of low efficiency in generating a downstream task model by fine-tuning parameters of a pre-training model.

In a first aspect, the present application provides a downstream task model generation method, including: acquiring a training data set in a downstream task scene; adding execution parameters of a downstream task to original parameters of a pre-training model; generating a task model of the downstream task, by using the training data set to adjust the execution parameters of the downstream task in the pre-training model, where the task model of the downstream task is used for executing the downstream task.

In a second aspect, the present application provides a task execution method, including: acquiring input data in response to an execution instruction for a downstream task; generating input information corresponding to the input data according to input format information of a task model in a downstream task scene; inputting the input information into a trained task model for processing to obtain a task processing result, where the task model is obtained by adding execution parameters of the downstream task to original parameters of a pre-training model and adjusting the execution parameters of the downstream task in the pre-training model based on a training data set in the downstream task scene; and outputting the task processing result.

In a third aspect, the present application provides an execution method for a visual question answering task, the method including: acquiring an input image and a question text; generating input information of a visual question answering task model according to input format information, the image and the question text of the visual question answering task model in a visual question answering task scene; inputting the input information into the visual question answering task model for processing to obtain an answer text corresponding to the question text, where the visual question answering task model is obtained by adding execution parameters of the downstream task to original parameters of a pre-training model and adjusting the execution parameters of the downstream task in the pre-training model based on a training data set in the visual question answering task scene; and outputting the answer text corresponding to the question text.

In a fourth aspect, the present application provides an electronic device, which includes a processor and a memory communicatively coupled with the processor; the memory store computer executable instructions; the processor executes the computer executable instructions stored in the memory to realize the method according to any one of the above aspects.

In a fifth aspect, the present application provides a computer readable storage medium, where computer executable instructions are stored in the computer readable storage medium, and the computer executable instructions, when executed by a processor, are used for implementing the method according to any one of the above aspects.

### BRIEF DESCRIPTION OF DRAWINGS

In the drawings, unless otherwise specified, the same reference numerals throughout several drawings refer to the same or similar parts or elements. The drawings are not necessarily drawn to scale. It should be understood that these drawings depict only some embodiments disclosed in accordance with this application and should not be considered as limiting the scope of this application.

The accompanying drawings, which are incorporated in and constitute a part of this specification, illustrate embodiments consistent with this application and together with the description, serve to explain the principles of this application.
FIG. 1 illustrates a schematic diagram of an example network architecture to which this application is applicable.
FIG. 2 illustrates a flowchart of a downstream task model generation method provided by an exemplary embodiment of the present application.
FIG. 3 illustrates a schematic diagram showing the effect of the downstream task model generation method provided by the present application to improve the fine-tuning training efficiency.
FIG. 4 illustrates a flowchart of a multimodal task model generation method provided by an exemplary embodiment of the present application.
FIG. 5 illustrates a flowchart of a task execution method provided by an exemplary embodiment of the present application.
FIG. 6 illustrates a flowchart of an execution method of a visual question answering task provided by an exemplary embodiment of the present application.
FIG. 7 illustrates a schematic structural diagram of a downstream task model generation device provided by an exemplary embodiment of the present application.
FIG. 8 illustrates a schematic structural diagram of a task execution device provided by an exemplary embodiment of the present application.
FIG. 9 illustrates a schematic structural diagram of an execution device for a visual question answering task provided by an exemplary embodiment of the present application.
FIG. 10 illustrates a schematic structural diagram of an electronic device provided by an exemplary embodiment of the present application.

Through the above drawings, clear embodiments of the present application have been shown, which will be described in more detail later. These drawings and written descriptions are not intended to limit the scope of the concept of the application in any way, but to explain the concept of the application to those skilled in the art by referring to specific embodiments.

### DESCRIPTION OF EMBODIMENTS

In order to make the purpose, technical scheme and advantages of this application more clear, the technical scheme of this application will be described clearly and completely with specific embodiments of this application and corresponding drawings. Obviously, the described embodiments are only parts of the embodiments of this application, not the whole embodiments. Based on the embodiments in this application, all other embodiments obtained by those skilled in the art without creative labor belong to the protection scope of this application.

Reference will now be made in detail to exemplary embodiments, examples of which are illustrated in the accompanying drawings. When the following description refers to the drawings, unless otherwise indicated, the same numbers in different drawings indicate the same or similar elements. The implementations described in the following exemplary embodiments do not represent all implementations consistent with this application. Rather, they are merely examples of devices and methods consistent with some aspects of the present application as detailed in the appended claims.

First, the terms involved in this application are explained.

Visual question answering task: determine an answer to a question from visual information of an input image according to the input image and the question.

Image caption task: generate a description text of an input image.

Visual entailment task: predict a semantic correlation between an input image and a text, that is, entailment, neutrality or contradiction.

Referring expression compression: locate an image area corresponding to an input text in an input image according to the input text.

Image generation task: generate an image based on an input description text.

Text-based emotion classification task: predict emotion classification information of an input text.

Text summarization task: generate summary information of an input text.

Multimodal task: refers to a downstream tasks in which input data and output data involve various modal data such as images and texts, such as a visual question answering task, an image caption task, a visual entailment task, a referring expression comprehension task, an image generation task, etc.

Multimodal pre-training model: refers to a pre-training model in which input data and output data involve various modal data such as images and texts, and can be applied to a multimodal task processing after fine-tuning training. For example, CLIP (Contrastive Language-Image Pre-Training) model is a multi-modal pre-training model.

Prompt tuning strategy (Prompt tuning): a method used to assist large-scale pre-training models in fine-tuning training.

Downstream task execution parameter (Prompt): also known as a prompt parameter, which is a trainable parameter added in a prompt fine-tuning strategy of pre-training model.

The fine-tuning method for the pre-training model has the following technical defects: with the increasing scale of the pre-training model, the hardware requirements and downstream data requirements for the fine-tuning training of the pre-training model are rising, and the efficiency of fine-tuning training for the pre-training model is low.

In order to solve the above technical problems, an existing fine-tuning method for the pre-training model based on prompts is: adding a group of prompts (prompt) in front of the category vector, matching the category vector with added prompts (prompt) with the sample vector, and selecting a category with a highly matched classification as the category of the current sample. However, when used in different downstream tasks, it is necessary to design appropriate prompts (prompt) for each downstream task and data set. When there are plenty of data sets or downstream tasks, it is very time-consuming and labor-intensive. In addition, the manual design of prompts (prompt) is not stable and may be sensitive to a certain character (or word), which leads to poor fine-tuning training effect.

The present application provides a downstream task model generation method, which comprises the following steps: when performing a fine-tuning training on a pre-training model to generate a downstream task model, obtaining a training data set in a downstream task scene; adding a downstream task execution parameter to an original parameter of the pre-training model; performing an adjustment on the downstream task execution parameter in the pre-training model based on the training data set in the downstream task scene, and fixing the original parameter of the pre-training model. After the adjustment of the execution parameters of the downstream task is completed, the task model of the downstream task is obtained. As the original parameters of the pre-training model are fixed, the knowledge learned by the pre-training model in the pre-training corpora can be retained, and only a small number of execution parameters of the downstream task are fine-tuned. The downstream task model that meets the requirements can be obtained by fine-tuning training with less downstream task training data. Under the same scale of the training data set, the fine-tuning training effect for the pre-training model is improved. With the increase of the pre-training model scale, the efficiency improvement of fine-tuning training is more and more remarkable.

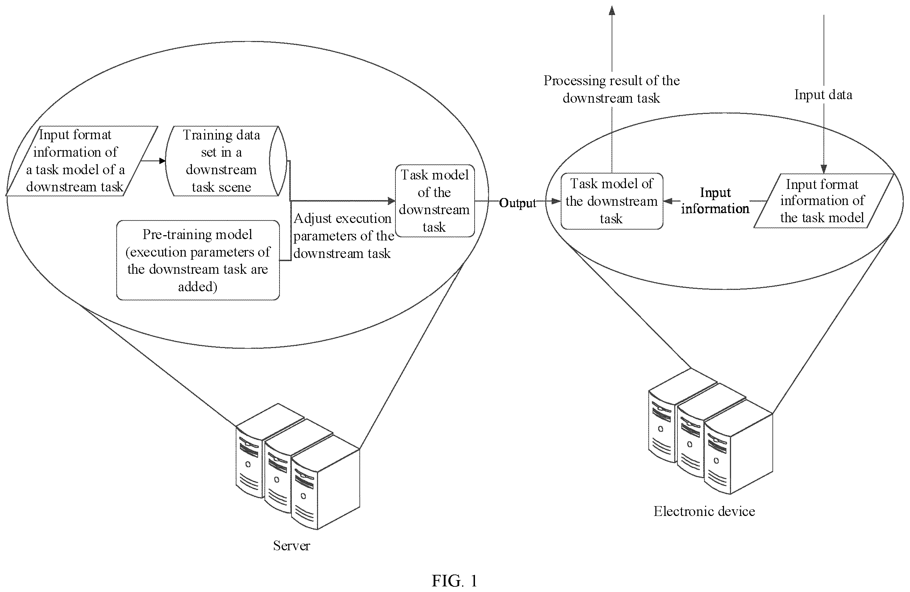

FIG. 1 is a schematic diagram of an example network architecture to which this application is applicable. As shown in FIG. 1, the network architecture includes a server responsible for generating a downstream task model and an electronic device responsible for executing a downstream task based on the downstream task model.

Among them, the server can be a server cluster deployed in the cloud or a local device with computing ability. The server stores a pre-training model completed by pre-training on large-scale training corpora. The server can obtain the training data set in the downstream task scene. When the server generates the downstream task model by performing fine-tuning training on the pre-training model, the original parameters of the pre-training model are fixed, the execution parameters of the downstream task are added to the original parameters of the pre-training model, and the execution parameters of the downstream task in the pre-training model are trained based on the training data set in the downstream task scene, so that the task model of the downstream task can be obtained after the training is completed. Further, the server can send the obtained task model of the downstream task to a designated electronic device.

The electronic device may be a client device that requests a server to generate a task model of a downstream task, or another electronic device designated by a service platform to which the user/server requesting to generate the task model of the downstream task belongs, specifically, it may be a computing device deployed locally by the customer, or a server deployed in the cloud.

The electronic device can be used for executing downstream tasks and providing corresponding services to an outside party, and the electronic device obtains input data of the downstream task in response to the execution instruction of the downstream task; generates input information of the task model according to the input format information of the task model in the downstream task scene; inputs the input information into the task model of the downstream task for processing, obtains a processing result of the downstream task, and outputs the processing result of the downstream task.

Exemplarily, taking the downstream task being a visual question answering task as an example, the server adds the execution parameters of the downstream task to the original parameters of the pre-trained language model according to the training data set in the visual question answering task scene, and performs a training on the execution parameters of the downstream task in the pre-trained language model based on the training data of the visual question answering task, and the visual question answering model can be obtained after the training is completed. The visual question answering model can be deployed to a local/another cloud server to provide visual question answering function to the outside party. When a visual question answering task is required to be executed, a device deployed with a visual question answering model acquires images and question texts input under a visual question answering task scene, and generates input information of the visual question answering task model according to the input format information, images and question texts of the visual question answering task model under the visual question answering task scene; inputs the input information into the task model of the downstream task for processing, obtains the downstream task processing result, and outputs the downstream task processing result.

The technical scheme of this application and how the technical scheme of this application solves the above technical problems will be described in detail with specific examples. The following specific embodiments can be combined with each other, and the same or similar concepts or processes may not be repeated in some embodiments. Embodiments of the present application will be described below with reference to the accompanying drawings.

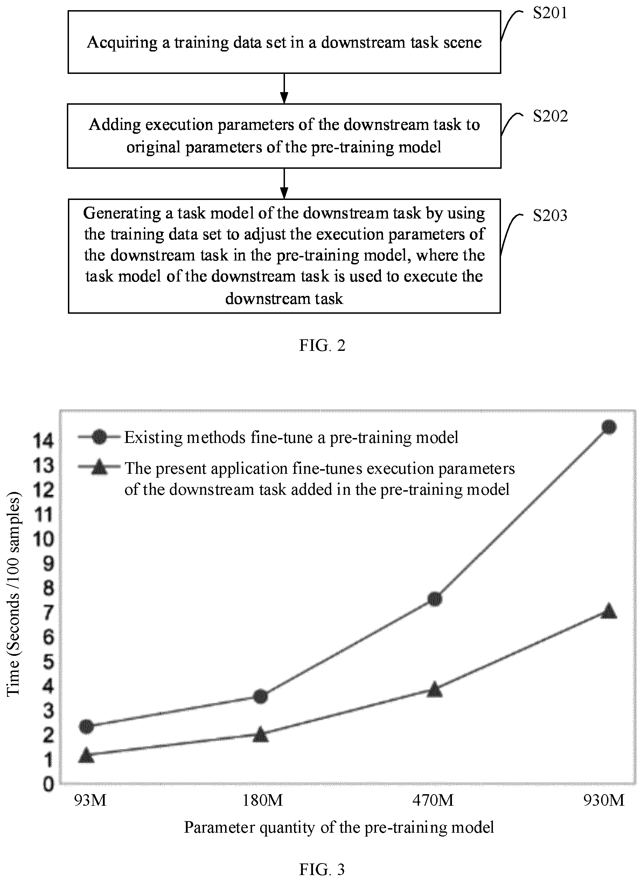

FIG. 2 is a flowchart of a downstream task model generation method provided by an exemplary embodiment of the present application, and the execution subject of this embodiment could be the above server responsible for generating the downstream task model. As shown in FIG. 2, the specific steps of the method include the following steps S201 to S203.

Step S201: acquiring a training data set in a downstream task scene.

In this embodiment, the task objectives are different in different downstream task scenes, that is, the input and output of the task model are not exactly the same, and different downstream task functions have been realized.

When fine-tuning a pre-training model to generate the task model of the downstream task, the training data sets used in different downstream task scenes are different, and the input format information and output format information of the downstream task model to be generated can be designed according to the task objectives of the downstream task scene. When acquiring the training data set in the downstream task scene, it is generated based on the input format information and output format information of the downstream task model.

Exemplarily, in an example visual question answering task scene, the input of the task model includes an input image and a question, and the output is an answer text of the question. In the task scene of generative image caption, the input of task model includes the input image and specific prompt text, and the output is a descriptive text of the input image.

Step S202: adding execution parameters of the downstream task to original parameters of the pre-training model.

In this embodiment, the execution parameters of the downstream task are added to the original parameters of the pre-training model, and the amount of the added execution parameters of the downstream task is far less than that of the original parameters.

Among them, the execution parameters of the downstream task can be a set of parameters generated by random initialization, or a set of parameters generated according to the data in the downstream task scene. When fine-tuning the pre-training model to generate the downstream task model, only the execution parameters of the downstream task in the pre-training model are adjusted to obtain a task model more suitable for specific downstream task scenes.

Exemplarily, the execution parameters of the downstream task can be concatenated to the original parameters of the pre-training model. For example, the execution parameters of the downstream task can be respectively concatenated to one or more layers of parameters of the pre-training model.

Step S203: generating a task model of the downstream task by using the training data set to adjust the execution parameters of the downstream task in the pre-training model, where the task model of the downstream task is used to execute the downstream task.

In this step, in the process of performing fine-tuning training on the pre-training model to generate the downstream task model, the original parameters of the pre-training model are fixed, and the execution parameters of the downstream task in the pre-training model are trained by using the training data set in the downstream task scene, that is, the original parameters of the pre-training model are not updated, only the added execution parameters of the downstream task are updated, and the task model of the downstream task is obtained after the training is completed.

In this embodiment, the original parameters of the pre-training model in the task models of multiple downstream tasks generated based on the same pre-training model are the same, and the added execution parameters of the downstream tasks are different.

For example, the input information corresponding to the sample data in the training data set is input into the pre-training model with the added execution parameters of the downstream task, and the processing result is output; a loss value is calculated according to the labeled data corresponding to the processing result and the sample data, and the preset loss function, and the execution parameters of the downstream task added in the pre-training model are updated according to the loss value.

Among them, the setting of the loss function, the conditions for the end of training, etc. is similar to that in the existing fine-tuning training method for the pre-training model, which is not repeated here.

In this embodiment, the downstream task model can be applied to the field of natural language processing or computer vision.

For example, the pre-training model can be a pre-trained language model, and the downstream tasks can include at least one of the following tasks: visual question answering task, image caption task, visual entailment task, referring expression comprehension task, image generation task, text-based emotion classification task, and text summarization task. Among them, the visual question answering task, image caption task, visual entailment task, referring expression comprehension task and image generation task belong to the cross field of natural language processing and computer vision, while text-based emotion classification task and text summarization task belong to the field of natural language processing.

With the method provided in this embodiment, fine-tuning training is performed on the execution parameters of the downstream task in the pre-training language model with the added execution parameters of the downstream task based on the training data set in any downstream task scene, thus obtaining the task model for executing the downstream task.

The method provided by the application can be applied to realize the visual assistant functions of helping visually impaired and blind patients understand online pictures, identify objects, understand the surrounding environment and the like. It can also be used for the chat robot functions in VR programs to help users communicate with virtual partners. It can also be used in online education and other scenes to help answer students' questions.

In addition, the method provided in this embodiment can be used for fine-tuning training of other pre-training models besides the language model, which can be a generative pre-training model, a pre-training classification model, a multi-modal pre-training model, etc., which is not limited here.

In this embodiment, in the process of performing fine-tuning training on the pre-training model to generate the downstream task model, the original parameters of the pre-training model are fixed, and only a few additional execution parameters of the downstream task are optimized, so that the number of parameters to be optimized can be reduced, and a better fine-tuning training effect can be achieved in a case that only a few samples are used, and the knowledge learned by the pre-training model in the pre-training corpora is retained, thereby avoiding the calculation expense caused by fine-tuning all model parameters, improving the efficiency of fine-tuning training for the pre-training model and realizing a fast fine-tuning training for the pre-training model, thus, efficiency of generating the downstream task model is improved. In an embodiment, based on the network architecture shown in FIG. 1, the server can also send the task model of the downstream task to the electronic device for executing the downstream task after performing fine-tuning training on the pre-training model to obtain the task model of the downstream task. The electronic device uses the task model of the downstream task to execute the downstream task, which can realize a corresponding function of the downstream task or provide the corresponding services of the downstream task to the outside party.

The electronic device may be a client device that requests a server to generate a task model of a downstream task, or another electronic device designated by the service platform to which the user/server requesting to generate the task model of the downstream task belongs, a computing device deployed locally by the client, a server deployed in the cloud, etc.

Exemplarily, the server can provide the functions of generating task models of downstream tasks such as visual question answering task, image caption task, visual entailment task, referential expression comprehension task, image generation task, text-based emotion classification task, text summarization task, etc., to the outside party. Based on the downstream tasks specified by the user and based on the pre-trained language model, the server can perform the training for the execution parameters of the downstream task added in the pre-trained language model with the training data set in the downstream task scene specified by the user, generate the task model of the specified downstream task, and provide the task model of the downstream task to the electronic device specified by the user. Users can specify any of the downstream tasks such as visual question answering task, image caption task, visual entailment task, referential expression comprehension task, image generation task, text-based emotion classification task, text summarization task, etc.

In an embodiment, the server can also store the generated task models of one or more downstream tasks, so as to directly obtain them when needed next time.

In an embodiment, when storing the task model of each downstream task, as only the execution parameters of the downstream task are different in the task model generated by training based on the same pre-training model, and the original parameters of the pre-training model are completely the same, it is possible to store a copy of the original parameters of the pre-training model and store the execution parameters of the downstream task of each downstream model after the training is completed. When it is required to obtain a task model in a certain downstream task scene, the complete parameters of the task model of the downstream task can be obtained by adding the execution parameters of the downstream task trained in the downstream task scene to the original parameters of the pre-training model, so that the task model in the downstream task scene can be generated, which can save storage space and make the management and maintenance of the task model more flexible.

In another embodiment, after adjusting the execution parameters of the downstream tasks in the pre-training model to obtain the task model of the downstream tasks, the server can also directly store the task model of the downstream tasks locally. Further, the server can also be used to execute downstream tasks, realize corresponding functions of the downstream task, or provide the corresponding services of the downstream task to the outside party.

For example, the server receives the execution instruction for the downstream task, and in response to receiving the execution instruction for the downstream task, the server obtains the input data in the downstream task scene; generates the input information of the task model according to the input format information of the task model in the downstream task scene; inputs the input information into the task model of the downstream task for processing to obtain a processing result of the downstream task; and outputs the processing result of the downstream task.

In an embodiment, in the above step S201, obtaining the training data set in the downstream task scene can be realized in the following manners: obtaining the sample data in the downstream task scene, and generating input information corresponding to the sample data according to the input format information of the task model in the downstream task scene; and acquiring labeled data corresponding to the input information, where the input information and the labeled data form the training data set. The labeled data of the training samples include correct task processing results corresponding to the training samples.

For example, input information that meets the input format requirements of the task model can be generated based on the input format information of the task model in the downstream task scene and image-text data in the downstream task scene, and the labeled data of the input information can be acquired, where the input information and the labeled data of the input information constitute the training data set of the downstream task.

Among them, the labeled data of the input information can be obtained by manual labeling. In this embodiment, training data sets with only a few labeled data are required for training to obtain the task model of the downstream task with better effect.

In some embodiments, a corresponding input prompt template can be set for each downstream task scene, and the input prompt template is used to indicate the input format information of the downstream task model. The input prompt templates corresponding to different downstream tasks can be different. In addition, it is not excluded that there are two different downstream tasks corresponding to the same input prompt template.

Exemplarily, in an example visual question answering task scene, the input of the task model includes an input image and a question, and the output is an answer text of the question. The input prompt template of the visual question answering task can include the input image and question, which can be expressed in the following form: "[BOS'] input image [BOS'] [BOS] question [BOS]". Where "[BOS'] input image [BOS']" represents data of the input image (such as an image vector generated by encoding the image) and can refer to different images. "[BOS] question [BOS]" refers to the data of the input question (such as a text vector generated by encoding the question) and can specify different questions. Among them, two "[BOS']" are used to mark image data and two "[BOS]" are used to mark text data. Two other different symbols can also be used to distinguish between marked image data and marked text data, for example, "[]" is used to mark image data and "{}" is used to mark the text data in the following examples. The output of the visual question answering task is the answer text of the question.

Exemplarily, in the scenario of a generative image caption task, the input of the task model includes an input image and a specific prompt text. The input prompt template of the generative image caption task can include the input image and the specific prompt text, which can be expressed in the following form: "What does the [input image] image describe". Among them, "[input image]" inputs image data and can refer to different images. "What does the image describe" is the specific prompt text of the preset setting, and other prompt texts can be used, yet once set, it remains fixed. The output of the generative image caption task is a description text.

Exemplarily, the input prompt template of a classified image caption task can be the same as the input prompt template of the generated image caption task, which is expressed in the following form: "What does the [input image] image describe". The output of the classified image caption task is a classification label of description text, and different classification labels refer to one of the preset multiple categories of description text classification.

Exemplarily, the input prompt template of an example visual entailment task can include an input image, an input text 1 and an input text 2, and the input prompt template can be expressed as: "Do [input image] and text 1{input text 1} mean text 2{input text 2}". The output of the visual entailment task is a determination result, including yes, no, possible and so on.

When the input information corresponding to the sample data is generated according to the input format information of the task model in the downstream task scene, the input information that meets a style requirement in the input prompt template can be generated based on the input prompt template in the downstream task scene and based on the sample data such as image-text data in the downstream task scene.

Exemplarily, the server can obtain the training data set in the visual question answering task scene based on the input prompt template of the visual question answering task, train the added execution parameters of the downstream task in the pre-training model to obtain the visual question answering task model, and store the obtained (that is, generated) visual question answering task model. The server provides visual question answering function to an outside party. In a case that other functional modules need to use the visual question answering function, the visual question answering function module is called to send an execution instruction of the visual question answering task to the server. The server responds to the execution instruction of the visual question answering task, obtains the input image and the question text, generates the input information corresponding to the input image and the question text according to the input prompt template of the visual question answering task, inputs the input information into the visual question answering task model, outputs an answer text through the visual question answering task model, and returns the answer text to other functional modules.

In an embodiment, when storing the task models of respective downstream tasks, as only the execution parameters of the downstream tasks are different in the task models generated by training on the same pre-training model, and the original parameters of the pre-training model are completely the same, it is possible to store a copy of the original parameters of the pre-training model and the execution parameters of the downstream tasks of respective downstream models after the training is completed. When it is required to obtain a task model, the complete parameters of the downstream task model can be obtained by adding the execution parameters of the downstream task of the downstream task model after training to the original parameters of the pre-training model, thus generating the task model of the downstream task, which can save storage space and make the management and maintenance of the task model more flexible.

In this embodiment, according to the input format information of the task model in each downstream task scene, corresponding input prompt templates are set for different downstream task scenes, and based on the input prompt template in the downstream task scene, the training data set in the downstream task scene can be automatically generated. Based on the training data set in the downstream task scene, a small number of execution parameters of the downstream task added in the pre-training model can be adjusted to generate the task model of the downstream task, which can improve the generation efficiency and performance of the downstream task model.

Referring to FIG. 3, in FIG. 3, the horizontal axis is the parameter quantity of the pre-training model, and the vertical axis is time required for fine-tuning the pre-training model. The longer the time required for fine-tuning, the lower the efficiency of fine-tuning training for the pre-training model. As shown in FIG. 3, for the pre-training model with the parameter quantities being the same scale, the time required for fine-tuning by the method of fine-tuning the execution parameters of the downstream task added in the pre-training model in the present application is shorter, which saves the time required for fine-tuning the pre-training model. With an increase in the scale of the parameter quantities of the pre-training model (for example, the time required for fine-tuning when the parameter quantity is increased from 93M to 180M, 470M and 930M in turn), compared with the existing fine-tuning method for the pre-training model, the method in the present application for fine-tuning the execution parameters of the downstream task added in the pre-training model can save more fine-tuning time, and the improvement on training efficiency is more significant.

In some embodiments, the execution parameters of the downstream task in the above step S202 can be generated in the following ways: selecting a plurality of words from a set vocabulary to generate word vectors of the plurality of words; generating corresponding execution parameter of the downstream task of each layer in the pre-training model according to the word vectors of the plurality of words, where the corresponding execution parameter of the downstream task of each layer include at least one word vector.

In an embodiment, in step S202, the corresponding execution parameters of the downstream task are added to the original parameters of each layer in the pre-training model, so that some trainable execution parameters of the downstream task are added to the layers of the pre-training model used for encoder (encoder) and decoder (decoder), and the original parameters of the pre-training model are fixed in the process of fine-tuning the pre-training model to generate the task model of the downstream task. Only the added execution parameters of the downstream task are adjusted, so that the execution parameters of the downstream task adjusted in different downstream task scenes are different, thereby generating a task model suitable for a specific downstream task scene.

In an embodiment, the execution parameters of the downstream task corresponding to different layers are different. By adding different execution parameters of the downstream task to different layers of the pre-training model, the fine-tuning effect of the pre-training model can be improved and the performance of the generated downstream task model can be improved.

In an embodiment, the execution parameters of the downstream task corresponding to different layers may be the same, that is, the execution parameters of the downstream task initially added on different layers of the pre-training model are the same. As the execution parameters of the downstream task will be adjusted during the fine-tuning training of the pre-training model, the execution parameters of the downstream task corresponding to different layers are different after the training is completed.

In an embodiment, the vocabulary set in each downstream task scene can be a randomly generated vocabulary or a preset vocabulary set uniformly.

In an embodiment, the vocabulary set in each downstream task scene can also be set according to the training data set in the downstream task scene, and different vocabularies are used in different downstream task scenes. The preset vocabulary can be a pre-configured vocabulary.

In an embodiment, when the execution parameters of the downstream task corresponding to each layer in the pre-training model are generated according to the word vectors of the plurality of words, a preset number of word vectors can be selected from the obtained multiple word vectors for concatenating according to the preset number of word vectors included in each execution parameter of the downstream task to obtain one execution parameter of the downstream task. According to the number of layers of the pre-training model, one execution parameter of the downstream task of each layer is generated. Among them, the preset number can be set and adjusted according to the actual application scenario/field, which is not limited here. For example, the preset number can take a value from 10 to 100, or other values can be taken.

In an embodiment, in order to make the execution parameters of the downstream task corresponding to different layers different, when the execution parameters of the downstream task corresponding to each layer in the pre-training model are generated according to the word vectors of the plurality of words, different word vectors can be selected and concatenated respectively for each layer according to the preset number of word vectors included in each execution parameter of the downstream task to generate the execution parameter of the downstream task of each layer, so that the word vectors selected for different layers are not exactly the same, thus ensuring that the added execution parameters of the downstream task for different layers are different.

In an embodiment, when the corresponding execution parameters of the downstream task are added to the original parameters of each layer in the pre-training model, the corresponding execution parameters of the downstream task can be concatenated in front (head) of the original parameters of each layer in the pre-training model. The execution parameters of the downstream task can be easily obtained, which is convenient for updating the execution parameters of the downstream task, and the execution parameters (prompt) of the downstream task are generated by concatenating a plurality of continuous word vectors for quick fine-tuning, thus alleviating the problem of sensitive prompt words.

In addition, when the corresponding execution parameters of the downstream task are added to the original parameters of each layer in the pre-training model, the corresponding execution parameters of the downstream task can also be concatenated behind (at the tail of) the original parameters of each layer in the pre-training model.

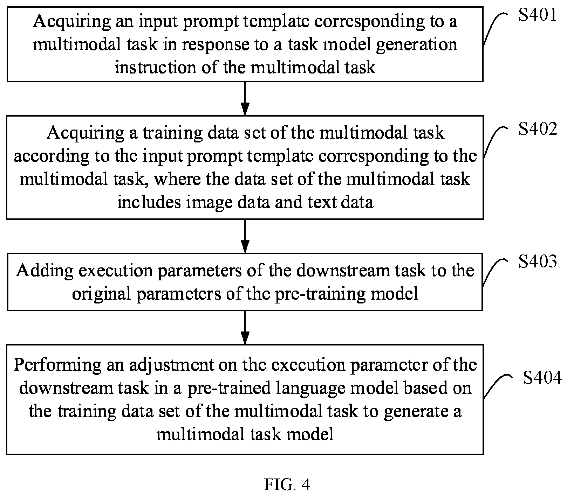

FIG. 4 is a flowchart of a multimodal task model generation method provided by an exemplary embodiment of the present application. The method provided in this embodiment can be used for fine-tuning the multimodal pre-training model to generate a multimodal task model.

As shown in FIG. 4, the specific steps of the method include the following steps S401 to S404.

Step S401: acquiring an input prompt template corresponding to a multimodal task in response to a task model generation instruction of the multimodal task.

Among them, multimodal tasks can include at least one of the following: a visual question answering task, an image caption task, a visual entailment task, a referring expression comprehension task, and an image generation task.

The input data and output data involved in the multimodal task include multimodal data such as images and texts. For example, the input of the visual question answering task includes image data and text data, and the output is text data. The input of the image caption task is image data and the output is text data. The input of visual entailment task is image and text, and the output is position information of an image area. The input of the image generation task is text data and the output is image data.

In this embodiment, a corresponding input prompt template can be set for each downstream task scene, and the input prompt template is used to indicate the input format information of the downstream task model.

The prompt template of the input prompt template of the multimodal task is used to indicate the format information of the input information of the pre-training model. The input prompt templates corresponding to different multimodal tasks can be different. In addition, it is not excluded that there are two different multimodal tasks corresponding to the same input prompt template.

Exemplarily, in an example visual question answering task scene, the input of the task model includes an input image and a question, and the output is an answer text for the question. The input prompt template of visual question answering task can include an input image and a question, which can be expressed in the following form: "[BOS'] input image [BOS'] [BOS] questions [BOS]". Where "[BOS'] input image [BOS']" represents the data of the input image (such as an image vector generated by encoding the image) and can refer to different images, "[BOS] question [BOS]" refers to data of the input question (such as a text vector generated by encoding the question) and can specify different questions. Among them, the two "[BOS']" are used to mark image data and the two "[BOS]" are used to mark text data. Two other different symbols can also be used to distinguish between the image data and the text data, such as using "[]" to mark image data and using "{}" to mark text data in the following examples. The output of the visual question answering task is the answer text of the question.

Exemplarily, in the scenario of a generative image caption task, the input of the task model includes an input image and specific prompt text. The input prompt template of the generative image caption task can include the input image and a specific prompt text, which can be expressed in the following form: "What does the [input image] image describe". Among them, data of the "[input image]" input image can refer to different images. "What does the image describe" is the specific prompt text of the preset setting, and other prompt texts can be used, but once set, it remains fixed. The output of the generative image caption task is a description text.

Step S402: acquiring a training data set of the multimodal task according to the input prompt template corresponding to the multimodal task, where the data set of the multimodal task includes image data and text data.

In this step, input information conforming to the format requirements of the input prompt template can be generated based on the input prompt template corresponding to the downstream multimodal task and based on sample data such as image-text data in the scene/field to which the multimodal task belongs, and the labeled data of the input information can be obtained, where the input information and the labeled data of the input information constitute the training data set of the downstream task.

Among them, the labeled data of the input information can be obtained by manual labeling. In this embodiment, only a few training data sets with labeled data are needed for training to obtain the task model of the downstream task with better effect. In this embodiment, the training data set of the multimodal task includes multimodal data such as images and texts.

Step S403: adding the execution parameters of the downstream task to the original parameters of the pre-training model.

The implementation of this step is consistent with that of the above step S202. Please refer to the related contents of the step S202 for the specific implementation, which will not be repeated here.

Step S404: performing an adjustment on the execution parameters of the downstream task in the pre-trained language model based on the training data set of multimodal task to generate a multimodal task model.

In this step, in the process of fine-tuning the pre-trained language model to generate a multimodal task model, the original parameters of the pre-trained language model are kept unchanged, and the execution parameters of the downstream task in the pre-trained language model are adjusted based on the training data set of the multimodal task, so as to obtain a model more suitable for a specific multimodal task.

Among them, the multimodal task model is used to execute a multimodal task according to input information generated based on input data and input prompt templates, and obtain a task processing result.

The implementation of this step is consistent with that of the above step S203. Please refer to the related contents of step S203 for the specific implementation, which will not be repeated here.

In this embodiment, prompt learning is introduced into the multimodal task, and based on prompt learning, the execution parameters of the downstream task are added to the pre-training language model, and the training data set of the multimodal task is generated based on the input prompt template of the multimodal task, and the execution parameters of the downstream task added in the pre-training language model are trained based on the training data set of the multimodal task to generate the task model of the multimodal task. In this way, the training effect of fine-tuning only a small number of execution parameters of the downstream task is comparable to that of training the full parameters of the pre-training model in some cases, which improves the training efficiency of the pre-training language model and can quickly train and generate the multi-modal task model.

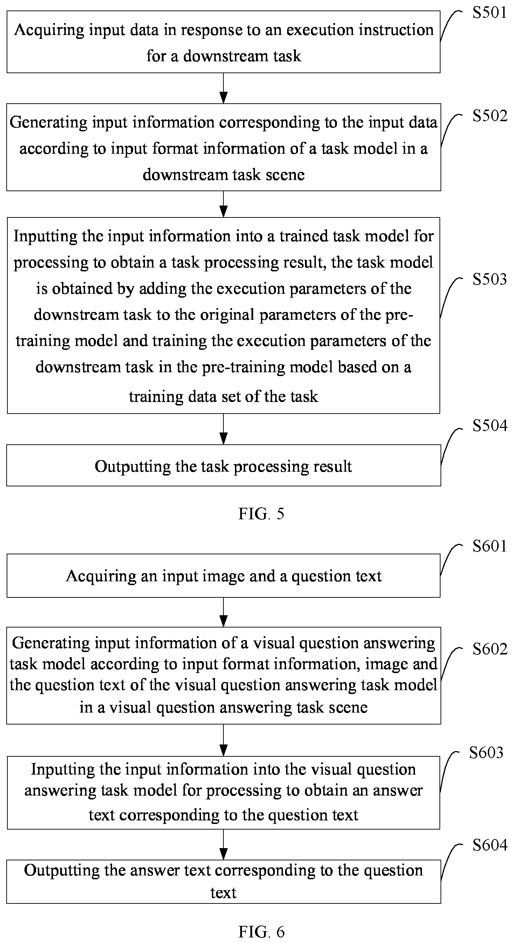

FIG. 5 is a flowchart of a task execution method provided by an exemplary embodiment of the present application. The task execution method provided in this embodiment can realize the execution of the downstream task by using the task model of the downstream task generated based on the aforementioned embodiment of the downstream task model generation method, so as to realize the corresponding functions of the downstream task scene and provide corresponding services. The execution subject of the method provided by this embodiment is an electronic device responsible for executing a downstream task based on a downstream task model.

As shown in FIG. 5, the specific steps of the method include the following steps S501 to S504.

Step S501: acquiring input data in response to an execution instruction for the downstream task.

In this embodiment, the electronic device stores the task model of the downstream task obtained by adjusting the execution parameters of the downstream task added in the pre-training model, and can provide the function of executing the downstream task or the service corresponding to the downstream task to an outside party based on the task model of the downstream task.

Exemplarily, the electronic device provides the function of executing the downstream task, and when other functional modules need to use the function of executing the downstream task, the functional module of the downstream task is called to send the execution instruction for the downstream task to the electronic device. The electronic device acquires input data in response to the execution instruction for the downstream task.

Exemplarily, an electronic device provides a service corresponding to a downstream task to an outside party, and when the service corresponding to the downstream task provided by the electronic device is required to be used, a user sends the execution instruction for the downstream task to the electronic device through a client. The electronic device acquires input data in response to the execution instruction for the downstream task.

Among them, the input data may include data in at least one of the following modes: image data and text data.

Step S502: generating input information corresponding to the input data according to input format information of a task model in a downstream task scene.

In this step, the electronic device encodes the data of each mode in the input data to generate a corresponding vector, and generates the input information of the task model according to the input format information of the task model in the current task scene.

In an embodiment, a corresponding input prompt template can be set for each downstream task scene, and the input prompt template is used to indicate the input format information of the downstream task model.

In this step, the input information corresponding to the input data is generated according to the input prompt template in the current task scene.

Exemplarily, the input prompt template of an example visual question answering task can include an input image and a question, which can be expressed in the following form: "[BOS'] input image [BOS'] [BOS] question [BOS]". Where "[BOS'] input image [BOS']" represents data of the input image (such as an image vector generated by encoding the image) and can refer to different images. "[BOS] question [BOS]" refers to data of the input question (such as a text vector generated by encoding the question) and can specify different questions. Among them, two "[BOS']" are used to mark image data and two "[BOS]" are used to mark text data. Two other different symbols can also be used to distinguish between the image data and the text data, such as using "[]" to mark the image data and using "{}" to mark text data in the following examples. The output of the visual question answering task is the answer text of the question. The input data obtained by the electronic device includes input images and question texts, and the images are encoded to generate image vectors, and the question texts are encoded to generate text vectors. According to the input prompt template "[BOS'] input image [BOS'] [BOS] question [BOS]" of the visual question answering task, the image vectors corresponding to the images are concatenated to the text vectors corresponding to the question texts to obtain corresponding input information.

Exemplarily, the input prompt template of a generative image caption task can include an input image and specific prompt text, which can be expressed in the following form: "What does the [input image] image describe". Among them, "[input image]" input image data and can refer to different images. "What does the image describe" is the specific prompt text of the preset setting, other prompt text can be used, but once set, it remains fixed. The output of the generative image caption task is a description text. The input data obtained by electronic device includes an input image, and the input image is encoded to generate an image vector. According to the input prompt template "What does the [input image] image describe]" of the generative image caption task, the specific prompt text "What does the image describe" is encoded to generate a text vector, and the image vector of the input image is concatenated to the text vector of the prompt text to get the corresponding input information.

Step S503: inputting the input information into a trained task model for processing to obtain a task processing result, the task model is obtained by adding the execution parameters of the downstream task to the original parameters of the pre-training model and training the execution parameters of the downstream task in the pre-training model based on a training data set of the task.

After the input information corresponding to the input data is generated based on the input prompt template in the current task scene, the input information is input into the trained task model for processing, and the task processing result is obtained.

In this embodiment, the task model is obtained based on the pre-training model, by using the downstream task model generation method provided in any of the above embodiments according to the input prompt template in the current task scene to obtain the training data set of the current task; adding the execution parameters of the downstream task to the original parameters of the pre-training model, and training (fine-tuning) the execution parameters of the downstream task in the pre-training model based on the training data set of the current task. For the specific training (fine-tuning) process, please refer to the relevant instructions in the above method embodiment, which will not be repeated here.

Step S504: outputting the task processing result.

Exemplarily, the electronic device provides the function of executing the downstream task, and when other functional modules need to use the function of executing the downstream task, the functional module of the downstream task is called to send an execution instruction for the downstream task to the electronic device. After the electronic device obtains the task processing result, it returns the task processing result to other functional modules.

Exemplarily, the electronic device provides a service corresponding to a downstream task to the outside party, and when needing to use the service corresponding to the downstream task provided by the electronic device, a user sends the execution instruction for the downstream task to the electronic device through a client. After obtaining the task processing result, the electronic device outputs the task processing result to the user's client device.

In this embodiment, the current task may include at least one of the following tasks: a visual question answering task, an image caption task, a visual entailment task, a referring expression comprehension task, an image generation task, a text-based emotion classification task, and a text summarization task. Among them, the visual question answering task, the image caption task, the visual entailment task, the referring expression comprehension task, and the image generation task belong to the cross field of natural language processing and computer vision, while the text-based emotion classification task and text summarization task belong to the field of natural language processing.

In this embodiment, the task model used to execute various downstream tasks is obtained by using the downstream task model generation method provided in any of the above embodiments and according to the input prompt template corresponding to the current task to obtain the training data set of the current task; and by adding the execution parameters of the downstream task to the original parameters of the pre-training model and training the execution parameters of the downstream task in the pre-training model based on the training data set of the current task, which can realize the rapid training for the pre-training model and quickly obtain the task model of the downstream task. Under the same scale of the training data set, the training effect is improved, thus enhancing the execution effect of the downstream task.

Referring to FIG. 6, which is a flowchart of an execution method for the visual question answering task provided by an exemplary embodiment of the present application. The execution subject of the method provided in this embodiment is an electronic device responsible for executing a visual question answering task based on a visual question answering task model.

As shown in FIG. 6, the specific steps of the method include the following steps S601 to S604.

Step S601: acquiring an input image and a question text.

The electronic device stores the visual question answering task model obtained by adding the execution parameters of the downstream task in the pre-training language model, and can provide the function of executing the visual question answering task or the service corresponding to the visual question answering task to an outside party based on the visual question answering task model.

Among them, the visual question answering task determines the answer to the question from the visual information of the input image according to the input image and the question.

Exemplarily, the electronic device provides the function of executing the visual question answering task, and when other functional modules need to use the function of executing the visual question answering task, the functional module of the visual question answering task is called to send an execution instruction of the visual question answering task to the electronic device. The electronic device obtains the image and the question text in the input parameters in response to the execution instruction of the visual question answering task.

Exemplarily, an electronic device provides a visual question answering service to the outside party, and when needing to use the visual question answering service provided by the electronic device, a user sends a visual question answering request to the electronic device through a client. The electronic device obtains the image and the question text input by the user in response to the visual question answering request.

Step S602: generating input information of a visual question answering task model according to input format information, the image and the question text of the visual question answering task model in a visual question answering task scene.

For example, a corresponding input prompt template can be set for each downstream task scene, and the input prompt template is used to indicate the input format information of the downstream task model.

In this step, according to the input prompt template in the current task scene, the input information corresponding to the input image and the question text is generated.

Exemplarily, the input prompt template corresponding to the visual question answering task can include the input image and question, which can be expressed in the following form: "[BOS'] input image [BOS'] [BOS] question [BOS]".

Where "[BOS'] input image [BOS']" represents the data of the input image (such as the image vector generated by encoding the image) and can refer to different images, "[BOS] question [BOS]" refers to the data of the input question (such as the text vector generated by encoding the question) and can specify different questions.

Among them, two "[BOS']" are used to mark image data and two "[BOS]" are used to mark text data. Two other different symbols can also be used to distinguish between image data and text data, such as using "[]" to mark image data and using "{}" to mark text data in the following examples.

For example, an image is encoded to generate a corresponding image vector, and a question text is encoded to generate a corresponding text vector; according to the input prompt template corresponding to the visual question answering task, the image vector and the text vector are concatenated to get the corresponding input information.

Step S603: inputting the input information into the visual question answering task model for processing to obtain an answer text corresponding to the question text.

Among them, the visual question answering task model is obtained by adding the execution parameters of the downstream task to the original parameters of the pre-training model and training the execution parameters of the downstream task in the pre-training model based on the training data set of the visual question answering task, which can be specifically obtained by the downstream task model generation method provided in any of the above embodiments, which will not be repeated in this embodiment.

Step S604: outputting the answer text corresponding to the question text.

Exemplarily, the electronic device provides the function of executing the visual question answering task, and when other functional modules need to use the function of executing the visual question answering task, the functional module of the visual question answering task is called to send an execution instruction for the visual question answering task to the electronic device. After obtaining the answer text, the electronic device returns the answer text to other functional modules.

Exemplarily, an electronic device provides a visual question answering service to the outside party, and when needing to use the visual question answering service provided by the electronic device, a user sends a visual question answering request to the electronic device through a client. After obtaining the answer text, the electronic device outputs the answer text to the user's client device.

In this embodiment, the visual question answering model obtains the training data set of the visual question answering task by using the downstream task model generation method provided in any of the above embodiments and according to the input prompt template corresponding to the visual question answering task; and the visual question answering model is obtained by adding the execution parameters of the downstream task to the original parameters of the pre-training language model, and training the execution parameters of the downstream task in the pre-training language model based on the training data set of the visual question answering task, which can realize fast fine-tuning for the pre-training language model and quickly acquire the visual question answering task model. Under the same scale of the training data set, the fine-tuning effect is improved, thus enhancing the execution effect of the visual question answering task.

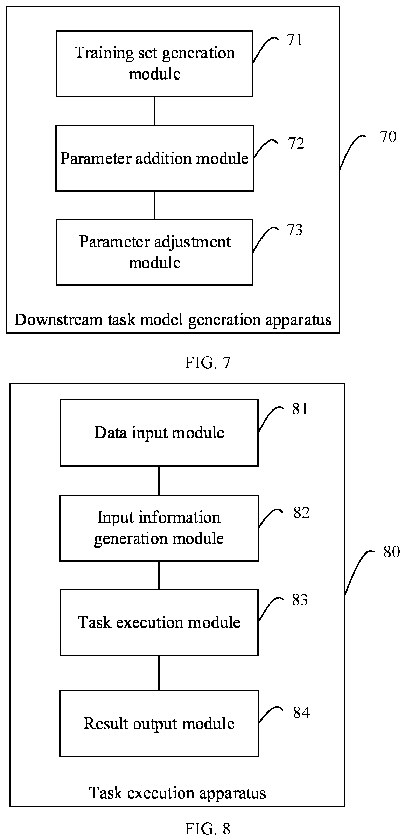

FIG. 7 is a schematic structural diagram of a downstream task model generation apparatus provided by an example embodiment of the present application. The apparatus provided by this embodiment is applied to execute the downstream task model generation method. As shown in FIG. 7, the downstream task model generation apparatus 70 includes a training set generation module 71, a parameter addition module 72, and a parameter adjustment module 73.

The training set generation module 71 is configured to acquire the training data set in the downstream task scene.

The parameter addition module 72 is configured to add the execution parameters of the downstream task to the original parameters of the pre-training model.

The parameter adjustment module 73 is configured to adjust the execution parameters of the downstream task in the pre-training model by using the training data set to generate a task model of the downstream task, and the task model of the downstream task is used to execute the downstream task.

In an embodiment, when adding the execution parameters of the downstream task to the original parameters of the pre-training model, the parameter addition module 72 is further configured to select a plurality of words from the set vocabulary to generate word vectors of the plurality of words; generate an execution parameter of the downstream task corresponding to each layer in the pre-training model according to the word vectors of the plurality of words, where the execution parameter of the downstream task corresponding to each layer includes at least one word vector. The corresponding execution parameter of the downstream task is added to the original parameters of each layer in the pre-training model.

In an embodiment, the parameter addition module 72 is further configured to set a vocabulary used in the downstream task scene according to the training data set in the downstream task scene.

In an embodiment, when adding the corresponding execution parameters of the downstream task to the original parameters of each layer in the pre-training model, the parameter addition module 72 is also configured to concatenate the corresponding execution parameters of the downstream task in front of the original parameters of each layer in the pre-training model.

In an embodiment, when obtaining the training data set in the downstream task scene, the training set generation module 71 is further configured to: obtain the sample data in the downstream task scene; generate he input information corresponding to the sample data according to the input format information of the task model in the downstream task scene; acquire labeled data corresponding to the input information, where the input information and the labeled data form the training data set.

In an embodiment, when the input information corresponding to the sample data is generated according to the input format information of the task model in the downstream task scene, the training set generation module 71 is further configured to: acquire an input prompt template in the downstream task scene, where the input prompt template is determined according to the input format information of the task model in the downstream task scene; generate the input information corresponding to the sample data according to the sample data and the input prompt template in the downstream task scene.

In an embodiment, after generating the task model of the downstream task, the parameter adjustment module 73 is further configured to send the task model of the downstream task to the electronic device for executing the downstream task.

In an embodiment, after the task model for executing the downstream task is obtained after the training is completed, the parameter adjustment module 73 is further configured to: store the task model of the downstream task; acquire input data of a downstream task in response to an execution instruction for the downstream task; generate the input information of the task model according to the input format information of the task model in the downstream task scene; input the input information into a task model of a downstream task for processing to obtain a processing result of the downstream task; and output the processing result of the downstream task.

In an embodiment, the pre-training model is a pre-trained language model, and the downstream tasks include at least one of the following: a visual question answering task, used to determine an answer to a question from visual information of an input image according to the input image and the question; an image caption task, used to generate a description text of an input image; a visual entailment task, used to predict a semantic correlation between an input image and a text; a referring expression compression task, used to locate an image area corresponding to an input text in an input image according to the input text; an image generation task, used to generate an image based on an input description text; and a text-based emotion classification task, used to predict emotion classification information of an input text; and a text summarization task, used to generate summary information of an input text.

The apparatus provided in this embodiment can be used to execute the downstream task model generation method provided based on any of the above embodiments, and the specific functions and technical effects that can be achieved are not repeated here.

FIG. 8 is a structural schematic diagram of a task execution apparatus provided by an example embodiment of the present application. The apparatus provided by this embodiment is applied to execute the above task execution method. As shown in FIG. 8, the task execution apparatus 80 includes a data input module 81, an input information generation module 82, a task execution module 83 and a result output module 84.

The data input module 81 is configured to acquire input data in response to the execution instruction for the downstream task.

The input information generation module 82 is configured to generate input information corresponding to the input data according to the input format information of the task model in the downstream task scene.

The task execution module 83 is configured to input the input information into the trained task model for processing and obtain the task processing result. The task model is obtained by adding the execution parameters of the downstream task to the original parameters of the pre-training model and adjusting the execution parameters of the downstream task in the pre-training model based on the training data set in the downstream task scene.

The result output module 84 is configured to output the task processing result.

Among them, the downstream task is any one of the following: a visual question answering task, used to determine an answer to a question from visual information of an input image according to the input image and the question; an image caption task, used to generate a description text of an input image; a visual entailment task, used to predict a semantic correlation between an input image and a text; a referring expression compression task, used to locate an image area corresponding to an input text in an input image according to the input text; an image generation task, used to generate an image based on an input description text; and a text-based emotion classification task, used to predict emotion classification information of an input text; and a text summarization task, used to generate summary information of an input text.

The apparatus provided in this embodiment can be used to execute the task execution method provided based on any of the above embodiments, and the specific functions and technical effects that can be achieved are not repeated here.

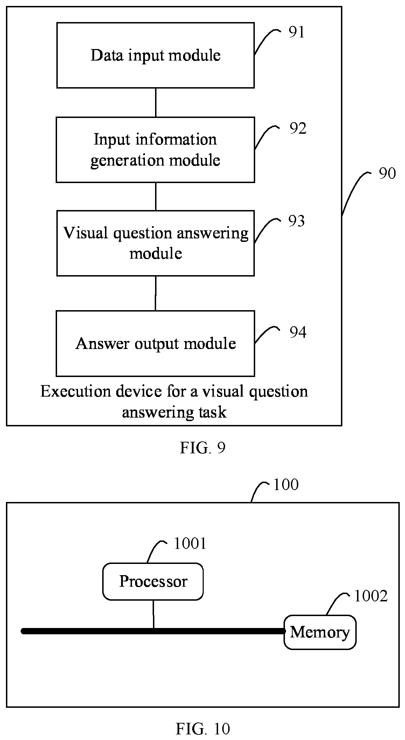

FIG. 9 is a structural diagram of an execution device for a visual question answering task provided by an example embodiment of the present application. The apparatus provided by this embodiment is applied to execute the execution method of the visual question answering task. As shown in FIG. 9, the execution device for the visual question answering task 90 includes a data input module 91, an input information generation module 92, a visual question answering module 93 and an answer output module 94.

The data input module 91 is configured to acquire the input image and the question text.

The input information generation module 92 is configured to generate the input information of the visual question answering task model according to the input format information, the image and the question text of the visual question answering task model in the visual question answering task scene.

The visual question answering module 93 is configured to input the input information into the visual question answering task model for processing, and obtain the answer text corresponding to the question text. The visual question answering task model is obtained by adding the execution parameters of the downstream task to the original parameters of the pre-training model and adjusting the execution parameters of the downstream task in the pre-training model based on the training data set in the visual question answering task scene.

The answer output module 94 outputs the answer text corresponding to the question text.

**In** an embodiment, when the input information of the visual question answering task model is generated according to the input prompt template, the image and the question text in the visual question answering task scene, the input information generation module 92 is further configured to encode the image to generate a corresponding image vector, and encode the question text to generate a corresponding text vector; concatenate the image vector to the text vector according to the input prompt template in the visual question answering task scene to obtain the input information of the visual question answering task model.

The apparatus provided in this embodiment can be used to execute the visual question answering task execution method provided based on any of the above embodiments, and the specific functions and technical effects that can be achieved are not repeated here.

FIG. 10 is a schematic structural diagram of an electronic device provided by an example embodiment of the present application. As shown in FIG. 10, the electronic device 100 includes a processor 1001 and a memory 1002 communicatively coupled with the processor 1001, and the memory 1002 stores computer executable instructions.

Wherein, the processor executes the computer executable instructions stored in the memory to realize the scheme provided by any of the above method embodiments, and the specific functions and technical effects that can be realized are not repeated here.

According to the downstream task model generation method, the task execution method and the device provided by the present application, by acquiring the training data set in the downstream task scene and adding the execution parameters of the downstream task to the original parameters of the pre-training model, the original parameters of the pre-training model are fixed during the fine-tuning training for the pre-training model, and only a small number of added execution parameters of the downstream task are optimized based on the training data set in the downstream task scene. Therefore, the knowledge learned by the pre-training model in the pre-training corpora can be retained, and the number of parameters that need to be optimized can be reduced, so that a better fine-tuning training effect can be obtained when only a small number of samples are used, so that the computational overhead caused by fine-tuning all model parameters can be reduced, the efficiency of fine-tuning training for the pre-training model can be improved, the rapid fine-tuning for the pre-training model can be realized, and the generation efficiency and performance of the downstream task model can be improved.

Embodiments of the application also provides a computer-readable storage medium, in which computer executable instructions are stored, and the computer executable instructions are used to realize the scheme provided by any of the above method embodiments when executed by the processor, and the specific functions and technical effects that can be achieved are not repeated here.

Embodiments of the application also provides a computer program product, which includes a computer program, wherein the computer program is stored in a readable storage medium, and at least one processor of the electronic device can read the computer program from the readable storage medium, and the at least one processor executes the computer program to enable the electronic device to execute the scheme provided by any of the above method embodiments, and the specific functions and the technical effects that can be achieved are not repeated here.

In addition, some processes described in the above embodiments and the attached drawings contain a plurality of operations that appear in a specific order, but it should be clearly understood that these operations may be executed out of the order in which they appear here or may be executed in parallel, and are only used to distinguish different operations, and the serial number itself does not represent any execution order. In addition, these processes may include more or fewer operations, and these operations may be performed sequentially or in parallel. It should be noted that the descriptions of "first" and "second" in this paper are used to distinguish different messages, devices, modules, etc., and do not represent the sequence, nor do they limit that "first" and "second" are different types. The meaning of "plural" is more than two, unless otherwise specifically defined.

Other embodiments of the present application will easily occur to those skilled in the art after considering the specification and practicing the invention disclosed herein. This application is intended to cover any variations, uses or adaptations of this application, which follow the general principles of this application and include common sense or common technical means in this technical field that are not disclosed in this application. The specification and examples are to be regarded as exemplary only, with the true scope and spirit of the application being indicated by the following claims.

It should be understood that this application is not limited to the precise structure described above and shown in the drawings, and various modifications and changes can be made without departing from its scope. The scope of this application is limited only by the appended claims.

## Claims

1. A downstream task model generation method, which is applied to a field of natural language processing or computer vision, the method comprising:
acquiring a training data set in a downstream task scene;
adding execution parameters of a downstream task to original parameters of a pre-training model;
generating a task model of the downstream task, by using the training data set to adjust the execution parameters of the downstream task in the pre-training model, wherein the task model of the downstream task is used for executing the downstream task.

2. The method according to claim 1, wherein the adding the execution parameters of the downstream task to the original parameters of the pre-training model comprises:
selecting a plurality of words from a set vocabulary to generate word vectors of the plurality of words;
generating an execution parameter of the downstream task corresponding to each layer in the pre-training model according to the word vectors of the plurality of words, wherein the execution parameter of the downstream task corresponding to each layer comprises at least one word vector;
adding corresponding execution parameter of the downstream task to the original parameters of each layer in the pre-training model.

3. The method according to claim 2, wherein the method further comprises:
setting a vocabulary used in the downstream task scene according to the training data set in the downstream task scene.

4. The method according to claim 2, wherein the adding corresponding execution parameter of the downstream task to the original parameters of each layer in the pre-training model comprises:
concatenating the corresponding execution parameter of the downstream task in front of the original parameters of each layer in the pre-training model.

5. The method according to claim 1, wherein the acquiring the training data set in the downstream task scene comprises:
acquiring sample data in the downstream task scene;
generating input information corresponding to the sample data according to input format information of the task model in the downstream task scene;
acquiring labeled data corresponding to the input information, wherein the input information and the labeled data form the training data set.

6. The method according to claim 5, wherein the generating the input information corresponding to the sample data according to the input format information of the task model in the downstream task scene comprises:
acquiring an input prompt template in the downstream task scene, wherein the input prompt template is determined according to the input format information of the task model in the downstream task scene;
generating the input information corresponding to the sample data according to the sample data and the input prompt template in the downstream task scene.

7. The method according to claim 1, wherein after generating the task model of the downstream task, the method further comprises:
sending the task model of the downstream task to an electronic device for executing the downstream task.

8. The method according to claim 1, wherein after generating the task model of the downstream task, the method further comprises:
storing the task model of the downstream task;
acquiring input data of the downstream task in response to an execution instruction for the downstream task;
generating input information of the task model according to input format information of the task model in the downstream task scene;
inputting the input information into the task model of the downstream task for processing to obtain a processing result of the downstream task; and
outputting the processing result of the downstream task.

9. The method according to any one of claims 1-8, wherein the pre-training model is a pre-trained language model, and
the downstream task comprises at least one of the following:
a visual question answering task, used to determine an answer to a question from visual information of an input image according to the input image and the question;
an image caption task, used to generate a description text of an input image;
a visual entailment task, used to predict a semantic correlation between an input image and a text;
a referring expression compression task, used to locate an image area corresponding to an input text in an input image according to the input text;
an image generation task, used to generate an image based on an input description text;
a text-based emotion classification task, used to predict emotion classification information of an input text;
a text summarization task, used to generate summary information of an input text.

10. A task execution method applied to a field of natural language processing or computer vision, the method comprising:
acquiring input data in response to an execution instruction for a downstream task;
generating input information corresponding to the input data according to input format information of a task model in a downstream task scene;
inputting the input information into a trained task model for processing to obtain a task processing result, wherein the task model is obtained by adding execution parameters of the downstream task to original parameters of a pre-training model and adjusting the execution parameters of the downstream task in the pre-training model based on a training data set in the downstream task scene; and
outputting the task processing result.

11. An execution method for a visual question answering task, the method comprising:
acquiring an input image and a question text;
generating input information of a visual question answering task model according to input format information, the image and the question text of the visual question answering task model in a visual question answering task scene;
inputting the input information into the visual question answering task model for processing to obtain an answer text corresponding to the question text, wherein the visual question answering task model is obtained by adding execution parameters of the downstream task to original parameters of a pre-training model and adjusting the execution parameters of the downstream task in the pre-training model based on a training data set in the visual question answering task scene; and
outputting the answer text corresponding to the question text.

12. The method according to claim 11, wherein the generating the input information of the visual question answering task model according to input prompt template, the image and the question text in the visual question answering task scene comprises:
encoding the image to generate a corresponding image vector, and encoding the question text to generate a corresponding text vector;
concatenating the image vector and the text vector according to an input prompt template in the visual question answering task scene to obtain the input information of the visual question answering task model.

13. An electronic device comprising: a processor and a memory communicatively coupled with the processor;
the memory stores computer executable instructions;
the processor executes the computer executable instructions stored in the memory to realize the method according to any one of claims 1-12.

14. A computer-readable storage medium storing computer executable instructions which, when executed by a processor, implement the method according to any one of claims 1-12.
